Europäisches Patentamt

European Patent Office

Office européen des brevets

(11) Veröffentlichungsnummer: **0 123 929**
**B1**

(12) **EUROPÄISCHE PATENTSCHRIFT**

(45) Veröffentlichungstag der Patentschrift:
22.06.88

(51) Int. Cl.⁴: **G 01 N 21/89**

(21) Anmeldenummer: 84103553.8

(22) Anmeldetag: 30.03.84

(54) Fehlerfeststellungsvorrichtung.

(30) Priorität: 22.04.83 DE 3314620

(43) Veröffentlichungstag der Anmeldung:
07.11.84 Patentblatt 84/45

(45) Bekanntmachung des Hinweises auf die Patenterteilung:
22.06.88 Patentblatt 88/25

(84) Benannte Vertragsstaaten:
BE DE FR GB NL

(56) Entgegenhaltungen:
DE - A - 2 800 351
FR - A - 2 166 390
US - A - 4 167 337
US - A - 4 352 564

PATENTS ABSTRACTS OF JAPAN, Band 3, Nr. 141
(E-153), 21. November 1979, Seite 50 E 153

(73) Patentinhaber: Erwin Sick GmbH Optik-Elektronik,
Sebastian-Kneipp-Strasse 1, D-7808 Waldkirch (DE)

(72) Erfinder: Sick, Erwin, Dr., Stifterweg 6, D-8021 Icking
(DE)
Erfinder: Schenk, Christoph, Dr., im Erlet 9,
D-8021 Icking (DE)

(74) Vertreter: Dipl.-Phys.Dr. Manitz Dipl.-Ing., Dipl.-Wirtsch.
Finsterwald Dipl.-Chem.Dr. Heyn Dipl.-Phys. Rotermund
Morgan, B.Sc.(Phys.), Robert-Koch-Strasse 1,
D-8000 München 22 (DE)

## Beschreibung

Die Erfindung betrifft eine Fehlerfeststellungsvorrichtung für die Oberflächen ebener Gegenstände nach dem Oberbegriff des Patentanspruchs 1.

Bei einer bekannten Fehlerfeststellungsvorrichtung dieser Art (US-PS 41 97 011) werden die nullte und die beiden ersten Beugungsordnungen über eine Empfangsoptik und eine Dunkelfeldblende auf einen einzigen Photodetektor konzentriert, welcher bei Abweichungen der Richtungen der in die einzelnen Beugungsordnungen geworfenen Strahlen von einem Normalwert ein elektrisches Signal abgibt. Bei der vorbekannten Fehlerfeststellungsvorrichtung werden auch höhere Beugungsordnungen erzeugt, die jedoch überwiegend nicht zu dem Photodetektor gelangen.

Die bekannte Fehlerfeststellungsvorrichtung gestattet es nicht, Richtungsabweichungen und Intensitätsschwankungen, die nur in einer einzelnen Beu-gungsordnung auftreten, von den Richtungsabwei-chungen und Intensitätsschwankungen anderer Beugungsordnungen zu unterscheiden. Außerdem geht durch die Erzeugung auch einer Vielzahl höherer Beugungsordnungen Licht für die eigentliche Messung verloren. Die winkelmäßige Trennung der einzelnen Beugungsordnungen ist begrenzt.

Weiter ist bereits eine Fehlerfeststellungsvorrichtung für mit feinen Rillen versehene Oberflächen bekannt (US-PS 43 52 564), bei der eine Vielzahl von Beugungsordnungen erzeugt wird, von denen jedoch nur die erste für die Fehlermessung benutzt wird.

Es ist auch schon ein System für die Tiefenabschätzung der auf einer Oberfläche vorhandenen feinen Rillen bekannt (US-PS 41 80 830), bei der wenigstens das Licht von zwei Beugungsordnungen mit diesen zugeordneten Photoempfängern erfaßt und daraus die Rillentiefe errechnet wird. Auch bei diesem bekannten System wird eine Fülle von ledig-lich geringe Winkelabstände aufweisenden Beu-gungsordnungen erzeugt.

Auch ist bereits ein Fehlerabtastsystem für die Spiralrillen von Videoplatten bekannt (US-PS 40 30 835), bei dem durch auf die Platte auffallendes Laserlicht mehrere Beugungsordnungen erzeugt werden, von denen jedoch nur die nullte ausgewertet wird.

Bei einer optischen Abtastvorrichtung für Schall-platten (FR-PS-2 166 390) tastet ein Laserstrahl mittels eines Schwingspiegels die Schallplatte in radialer Richtung periodisch ab. Die von der Schallplatte reflektierten Beugungsordnungen 0, +1 und -1 werden von drei nahe nebeneinander liegenden photoempfindlichen Elmenten erfaßt. Zwischen zwei dieser photoempfindlichen Elemente ist ein weiteres photoempfindliches Element zur Erfassung der Ordnung 1/2 angeordnet. Mit diesem zusätzlichen Element werden Abweichungen von dem vorgeschriebenen Beugungsbild erfaßt. Aufgrund der engen Nebeneinanderanordnung der photoempfindlichen Elemente werden auch zahlreiche höhere Beugungsordnungen erzeugt, deren Energie jedoch für die Messung nicht genutzt wird.

Das Ziel der vorliegenden Erfindung besteht darin, eine Fehlerfeststellungsvorrichtung der eingangs genannten Gattung zu schaffen, bei der die vom Gegenstand reflektierte Lichtintensität voll für die Fehlermessung genutzt wird.

Zur Lösung dieser Aufgabe sind die Merkmale des kennzeichnenden Teils des Patentanspruchs 1 vorgesehen.

Aufgrund dieser Ausbildung wird nicht nur eine optimale Menge des gebeugten Lichtes in die Beugungsordnungen gelenkt, sondern es wird auch eine maximale winkelmäßige Trennung der Beugungsordnungen von dem direkt reflektierten Strahl erzielt. Die Folge ist, daß das in der ersten und äu-ßerstenfalls noch der zweiten Beugungsordnung empfangene Licht eine das Grundrauschen deutlich übersteigende, relativ große Intensität besitzt und winkelmäßig einen so großen Abstand von der nullten Ordnung hat, daß eine Störung der mit abgebeugtem Licht arbeitenden Empfangskanäle durch das Licht der nullten Ordnung auf ein Minimum herabgesetzt wird.

Der Hauptzweck der erfindungsgemäßen Vorrichtung besteht darin, daß die mehreren Photoempfänger auf unterschiedliche Fehler hindeutendes Licht empfangen. Durch die Verknüpfung der Signale des Photoempfängers in der nullten Beugungsordnung und des Photoempfängers in insbesondere der ersten Beugungsordnung gelingt nicht nur die Erkennung aller Fehler, sondern auch eine Unterscheidung und eine Einteilung der Fehler in verschiedene Fehlerklassen.

Duch die Ausführungsform nach Anspruch 2 wird ermöglicht, daß mit der gleichen Vorrichtung gleichzeitig das Polarisationsverhalten des Laserstrahls beeinflussende als auch nicht beeinflussende Fehler erkannt werden können. Die Verwendung von polarisiertem Licht bei Fehlerfeststellungsvorrichtungen ist an sich bekannt (DE-OS 30 06 072).

Weitere vorteilhafte Ausführungsformen sind durch die Ansprüche 3 bis 6 gekennzeichnet.

Besonders ausgeprägte Beugungsbilder werden erhalten, wenn der Fahrstrahl in Richtung senkrecht zu den Rillen eine solche Erstreckung hat, daß er sich über mehr als fünf und insbesondere über zehn bis zwanzig Rillen erstreckt.

Die Erfindung wird im folgenden beispielsweise anhand der Zeichnung beschrieben; In dieser zeigt:

Fig. 1 eine schematische perspektivische Darstellung einer ersten Ausführungsform der erfindungsgemäßen Fehlerfeststellungsvorrichtung und

Fig. 2 eine perspektivische Wiedergabe einer weiteren Ausführungsform.

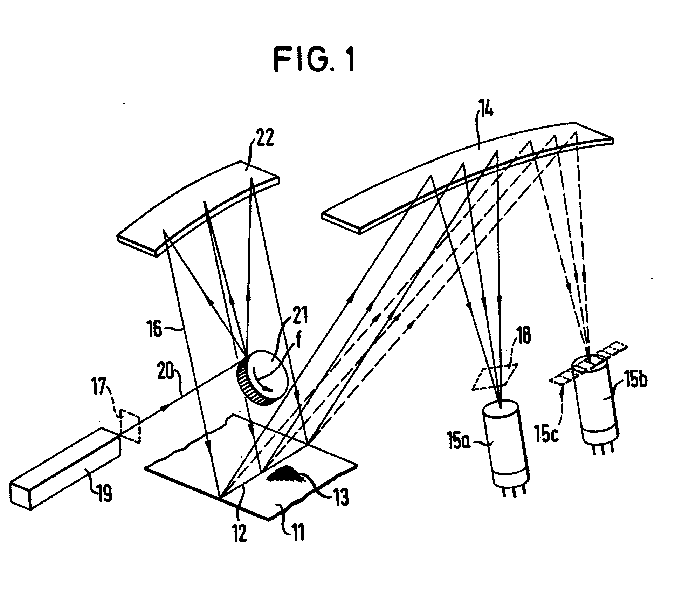

Nach Fig. 1 beaufschlagt ein von einem Laser 19 ausgehender scharfgebündelter Lichtstrahl 20 ein Spiegelrad 21, dessen reflektierende Umfangsstelle im Brennpunkt eines streifenförmigen Sendehohlspiegels 22 angeordnet ist. Der vom Sendehohlspiegel reflektierte Lichtstrahl 16 ist gegenüber dem Spiegelrad so weit versetzt, daß es an ihm vorbei und auf die Oberfläche eines ebenen Gegenstandes 11 gelangen kann, wobei von dem im Sinne des Pfeiles f umlaufenden Spiegelrad der Lichtstrahl 16 so über den Gegenstand 11 geführt wird, daß ein Lichtstrich 12 erzeugt wird. Der Lichtstrich 12 ver-

läuft senkrecht zu einer auf der Oberfläche des Gegenstandes 11 vorhandenen linearen Beugungsstruktur 13, welche z.B. aus den Mikrorillen einer Laserschallplatte bestehen kann.

Der von dem Sendehohlspiegel 22 reflektierte Fahrstrahl trifft gemäß Fig. 1 schräg auf die Oberfläche des Gegenstandes 11 auf, so daß er bei im wesentlichen reflektierender Ausbildung der Oberfläche unter dem Reflexionswinkel vom Gegenstand 11 reflektiert wird. Bei diesem Winkel ist im Abstand ein streifenförmiger Empfangshohlspiegel 14 angeordnet, welcher eine Zylinderoptik bildet. Die in ausgezogenen Linien dargestellte nullte Reflexionsordnung wird auf einen ersten Photoempfänger 15a konzentriert, welcher als Photomultiplier ausgebildet ist. Mit anderen Worten wird über die Hohlspiegel 22, 14 die Oberfläche des Spiegelrades 21 auf den Photomultiplier 15a abgebildet.

Aufgrund der Beugungsstruktur 13 wird Licht jedoch auch nach beiden Seiten in die erste Beugungsordnung gelenkt. Dargestellt ist in Fig. 1 nur die eine Beugungsordnung, welche aufgrund geeigneter Ausbildung des Zylinderspiegels 14 noch auf diesen auffällt und von diesem in einen zweiten Photoempfänger 15b, der ebenfalls als Photomultiplier ausgebildet ist, gelenkt wird. Auf diese Weise stehen zwei unterschiedliche Photoempfänger für den Empfang des reflektierten Lichtes zur Verfügung.

Indem beispielsweise ein Polarisator 17 im Laserstrahl 20 und ein Analysator 18 vor dem Photoempfänger 15a angeordnet werden, kann der Photoempfänger 15a auf depolarisierende Fehler, der Photoempfänger 15b aus sonstige Fehler ansprechen. Die nullte Ordnung ist in Fig. 1 in ausgezogenen Linien, die erste Beugungsordnung in gestrichelten Linien veranschaulicht.

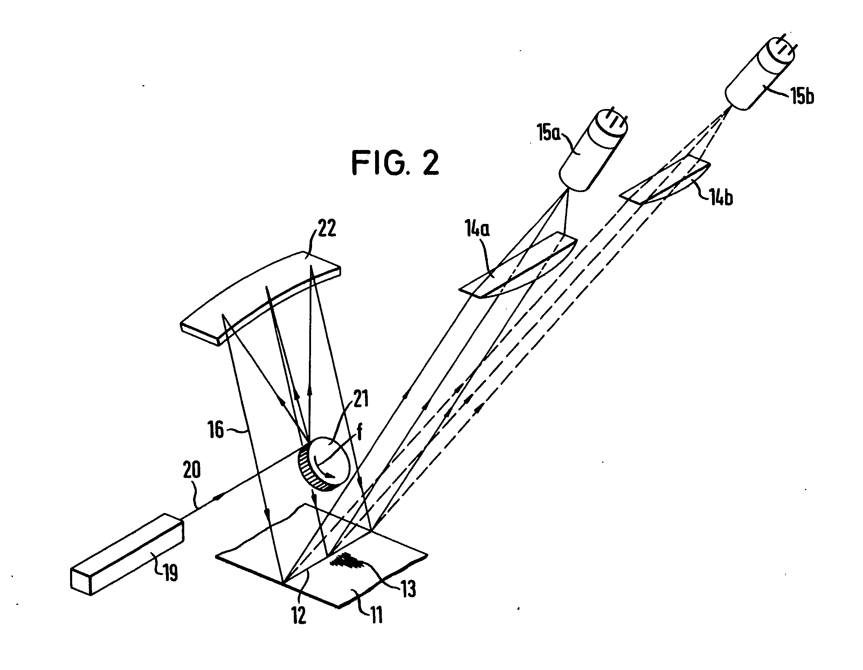

In Fig. 2 bezeichnen gleiche Bezugszahlen entsprechende Teile wie in Fig. 1.

Im Unterschied zu Fig. 1 besteht die Zylinderoptik des Ausführungsbeispiels nach Fig. 2 aus zwei separaten Zylinderlinsen 14a, 14b, welche die nullte bzw. die erste Beugungsordnung des vom Lichtstrich 12 ausgehenden Lichtes empfangen und auf die Photoempfänger 15a bzw. 15b konzentrieren.

Die Erfindung schafft somit für eine Beugungsstruktur aufweisende Gegenstände eine Strahlteilung, ohne daß hierzu ein besonderer Strahlenteiler erforderlich ist.

Bei kleinen Abmessungen des Prüflings in Abtastrichtung und gleichzeitiger Verwendung eines großflächigen Empfängers (z.B. rechteckiger Photomultiplier) könnte auf das Sammelsystem 14, 14a, 14b verzichtet werden.

In Fig. 1 ist auch noch am Ort der ersten Beugungsordnung gestrichelt eine linienförmige Photoempfängeranordnung 15c angedeutet, welche statt des Photoempfängers 15b vorgesehen sein kann und aus einer Anzahl nebeneinanderliegender Einzelphotoempfänger besteht. Auf diese Weise können seitliche Verschiebungen der ersten Beugungsordnung festgestellt werden, welche ein Maß für Veränderungen der Periodizität der periodischen Beugungsstruktur 13 sind.

Wird die Erfindung zur Überwachung der bei einem Drehvorgang auftretenden Rillen bzw. Linien angewendet, so kann mittels dieser Ausführungsform der Drehprozeß überwacht werden.

## Patentansprüche

1. Fehlerfeststellungsvorrichtung für die Oberflächen ebener Gegenstände (11) mit einer eine Lichtbeugung mit ausgeprägten Beugungsordnungen hervorrufenden, periodischen Struktur (13), welche aus im wesentlichen parallel zueinander verlaufenden Rillen besteht, wobei ein durch einen Laserstrahl (20) über eine Optik und eine Spiegelvorrichtung (21) auf der Oberfläche erzeugter, sich über mehrere Rillen erstreckender Abtastlichtfleck die Oberfläche senkrecht zu den Rillen periodisch abtastet, so daß eine Abtastlinie gebildet wird, und unter dem Reflexionswinkel des Laserstrahls eine Optik (14) angeordnet ist, die das an der Oberfläche reflektierte Licht der nullten und wenigstens noch der ersten Beugungsordnung erfaßt und auf eine photoelektrische Empfangsanordnung (15a; 15b; 15c) richtet, die bei Abweichungen der Reflexionsstrahlenrichtungen vom Normalwert ein Fehlersignal abgibt, wobei jeder Beugungsordnung ein eigener Photoempfänger (15a; 15b; 15c) zugeordnet ist, dadurch gekennzeichnet, daß die Spiegelvorrichtung als Spiegelrad ausgebildet ist und daß das Verhältnis von Lichtwellenlänge des Laserstrahls und der Gitterkonstanten der periodischen Struktur (13) derart ist, daß gerade die erste und höchstens die erste und zweite Beugungsordnung erzeugt wird.

2. Vorrichtung nach Anspruch 1, dadurch gekennzeichnet, daß im Laserstrahl (20) ein Polarisator (17) und vor einem (15) der Photoempfänger (15a; 15b, 15c) ein Analysator (18) angeordnet ist.

3. Vorrichtung nach Anspruch 1 oder 2, dadurch gekennzeichnet, daß die Optik auf der Empfangsseite einen einzigen streifenförmigen Zylinderspiegel (14) aufweist.

4. Vorrichtung nach Anspruch 1 oder 2, dadurch gekennzeichnet, daß die Optik auf der Empfangsseite soviel streifenförmige Zylinderlinsen (14a, 14b), wie Photoempfänger (15a, 15b) vorhanden sind, aufweist.

5. Vorrichtung nach einem der vorhergehenden Ansprüche, dadurch gekennzeichnet, daß der bei der ersten Beugungsordnung oder höheren Beugungsordnungen angeordnete Photoempfänger aus einer linienförmigen Photoempfängeranordnung (15c) mit aneinandergereihten Einzelphotoempfängern besteht, welche sich im wesentlichen parallel zur Abtastlinie (12) erstreckt.

6. Vorrichtung nach einem der vorhergehenden Ansprüche, dadurch gekennzeichnet, daß der Querschnitt des Fahrstrahls in Richtung senkrecht zu den Rillen (13) eine solche Erstreckung hat, daß er sich über mehr als fünf und insbesondere über zehn bis zwanzig Rillen erstreckt.

## Claims

1. Fault detecting apparatus for the surfaces of flat articles (11) with a periodic structure (13) which produces light diffraction with pronounced orders of diffraction and comprises grooves which extend substantially parallel to one another, wherein a scanning light bead generated on the surface by a laser beam (20) via an optical system and a mirror device (21) and extending over a plurality of grooves periodically scans the surface perpendicular to the grooves so that a scanning line is formed, and wherein an optical system (14) ist arranged at the angle of reflection of the laser beam which detects the light of the zero and at least also the first order of diffraction which is reflected at the surface, and directs it to a photoelectric receiving arrangement (15a 15b; 15c) which transmits a fault signal on deviation of the directions of the reflected beams from the normal value, with a respective photo receiver (15a; 15b; 15c) being associated with each diffraction order, characterized in that the mirror device is formed as a mirror wheel; and in that the ratio of the wave length of the laser beam to the grid constant of the periodic structure (13) is such that just the first and at most the first and second diffraction order is generated.

2. Apparatus in accordance with claim 1, characterized in that a polarizer (17) is arranged in the laser beam (20) and an analyzer (18) in front of one (15) of the photoreceivers (15a; 15b; 15c).

3. Apparatus in accordance with claim 1 or claim 2, characterized in that the optical system on the receiving side has a single strip-like cylindrical mirror (14).

4. Apparatus in accordance with claim 1 or claim 2, characterized in that the optical system on the receiving side has as many strip-like cylindrical lenses (14a, 14b) as there are photoreceivers (15a, 15b).

5. Apparatus in accordance with one of the preceding claims, characterized in that the photoreceiver arranged at the first diffraction order or at higher diffraction orders comprises a linear photoreceiver arrangement (15c) with individual photoreceivers arranged in series which extends substantially parallel to the scanning line (12).

6. Apparatus in accordance with one of the preceding claims, characterized in that the cross-section of the scanning beam in the direction perpendicular to the grooves (13) has an extent such that it extends over more than five and in particular over ten to twenty grooves.

## Revendications

1. Dispositif de détection de défauts sur la surface d'objets plans (11) à structure de diffraction (13) périodique conditionnant une diffraction lumineuse à ordres de diffraction marqués, consistant en stries essentiellement parallèles, et dans lequel une plage lumineuse produite sur la surface par un rayon laser (20) via une optique et un dispositif de miroir (21) et s'étendant sur plusieurs stries explore périodiquement la surface perpendiculairement aux stries, de manière à former une ligne de balayage, et dans lequel est disposée à l'angle de réflexion du rayon laser une optique (14), qui capte la lumière réfléchie sur la surface de l'ordre de diffraction zéro et au moins du premier ordre et la dirige sur un dispositif de réception photoélectrique (15a, 15b, 15c) qui émet un signal d'erreur lorsque les directions de réflexion du faisceau s'écartent des valeurs normales, un photorécepteur spécifique (15a, 15b, 15c) étant affecté à chaque ordre de diffraction, caractérisé en ce que le dispositif de miroir se présente sous la forme d'une roue à miroir et que le rapport des longueurs d'ondes lumineuses du rayon laser et de la constante de réseau de la structure périodique (13) est tel que l'on obtient directement le premier ordre de diffraction et, au maximum, les premier et deuxième ordres de diffraction.

2. Dispositif selon la revendication 1, caractérisé en ce qu'un polariseur (17) et un analyseur (18), placé devant l'un (15) des photorécepteurs (15a, 15b, 15c) sont disposés dans le faisceau laser.

3. Dispositif selon la revendication 1 ou 2, caractérisé en ce que l'optique présente un miroir cylindrique (14) unique en forme de bande du côté réception.

4. Dispositif selon la revendication 1 ou 2, caractérisé en ce que l'optique présente du côté réception autant de lentilles cylindriques (14a, 14b) qu'il y a de photorécepteurs (15a, 15b).

5. Dispositif selon l'une ou l'autre des revendications précédentes, caractérisé en ce que le photorécepteur coordonné au premier ordre de diffraction ou aux ordres supérieurs de diffraction consiste en un dispositif photorécepteur linéaire (15c) avec des éléments photorécepteurs individuels placés côté à côté et qui s'étend essentiellement parallèlement au trait de balayage (12).

6. Dispositif selon l'une ou l'autre des revendications précédentes, caractérisé en ce que la section transversale du rayon vecteur perpendiculairement aux stries (13) présente des dimensions telles qu'il s'étend sur plus de cinq et en particulier sur dix à vingt stries.

# FIG. 1

FIG. 2